# EUROPEAN PATENT SPECIFICATION

(11) **EP 1 048 535 B1**
(45) Date of publication and mention of the grant of the patent: **27.09.2006**
(21) Application number: 00302889.1
(22) Date of filing: 05.04.2000
(51) Int. Cl.: B60R 22/10, B60R 22/02

(54) **Shoulder belt adjuster for safety belt system**
Schultergurt-Einsteller für ein Sicherheitsgurtsytem
Dispositif de positionnement de ceinture thoracique pour système de ceinture de sécurité

(30) Priority: 26.04.1999 GB 9909570
(43) Date of publication of application: 02.11.2000
(73) Proprietor: H. Young (Operations) Limited, Newbury, Berkshire RG14 5PX (GB)
(72) Inventor: Crozier, Stuart John, Nr. Chippenham, Wiltshire SN15 2HQ (GB)
(74) Representative: McLeish, Nicholas Alistair Maxwell

(56) References cited:
- WO-A-93/01956
- US-A- 5 335 957
- US-A- 5 421 614
- US-A- 5 429 418

## Description

The present invention relates to a shoulder belt adjuster for use with a conventional safety belt system of three point design to adapt the safety belt to suit a child.

Conventional three point safety belt systems tend to be designed primarily to suit adults. Such systems comprise a single continuous run of webbing, mounted between a fixed anchor point at shoulder height on a vehicle frame and a retractable reel at floor level, together with a buckle mounted on the webbing for drawing the webbing across the body of a passenger to engage with a fixed clasp for securing the safety belt system across the passenger's body.

In use, therefore, when the buckle is engaged with the clasp, the webbing forms a lap belt stretched across the lower stomach of the passenger and a shoulder belt stretched across the shoulder of the passenger. The mounting of the anchor point and the clasp tend to assume that the passenger is of adult stature for fitting the lap belt but more especially the shoulder belt across the body of the passenger.

In practice, when such a safety belt system is employed for a child, the shoulder belt often tends to cut uncomfortably across the neck and/or face of the child and this reduces the effective protection afforded by the safety belt system.

A variety of devices are known for modifying such a safety belt system to suit a child, and these include various arrangements for altering the orientation of the shoulder belt system in use so that it crosses the body of the child at a lower position.

One known adjustment device is disclosed in French published patent application No. 2105358, and comprises a tubular element receiving both the lap belt and the shoulder belt adjacent the buckle of the safety belt system to hold the two together over a portion of their length and thereby alter the orientation of the shoulder belt particularly.

Another known adjustment device is described in European Patent No. 0575562 and comprises a closed tubular guide member having an interior passageway for receiving both the shoulder belt and the lap belt. The guide member is formed to allow the buckle to be drawn through the member to secure the buckle to the clasp, and has an open channel or slot along a portion of its upper surface for guiding the shoulder belt into the interior passageway at a position spaced above the path followed by the lap belt. This device also effectively brings the lap belt and the shoulder belt together along a portion of their length in order to re-orient the shoulder belt to adopt a lower path across the body of a child in use.

Such arrangements suffer from a number of drawbacks not the least of which is inconvenience of fitting and removal, firstly due to the need to thread the lap and shoulder belt through the device for fitting it to the safety belt system for use by a child, and later to thread the buckle back through the device for removal when the safety belt system is to be used by an adult again.

A further adjustment device is disclosed in US Patent No. 5,429,418 and comprises a body component with an opening for insertion over the head of a child and a belt for securing the body component around the rib cage of a child. A pair of securing straps are engageable over the lap belt and the shoulder belt of a conventional safety belt system and are securable to the body component for adjusting the orientation of the shoulder belt.

This device also suffers from inconvenience of fitting and removal, in the need to secure the body component over the head of the child before it can be employed.

Another device for use with a different safety belt system is disclosed in WO93/01956. This device is designed for holding together a pair of shoulder belts of a child's safety seat in order to prevent the child from freeing itself from their restraint. Again, the device comprises a tubular member for fixing round both shoulder belts.

The present invention seeks to overcome these problems and to provide a safety belt adjuster which is both easy and convenient to use and which assures added protection for the child during use of the safety belt.

According to the present invention, there is a provided a safety belt adjuster for use with a three-point safety belt system of the kind having a shoulder belt portion and a lap belt portion for adjusting the orientation of the shoulder belt portion for use by a child, the safety belt adjuster being characterised by a pair of panels arranged face-to-face and secured together in a central region to provide outside the central region two passageways for receiving respectively the shoulder belt portion and the lap belt portion of the safety belt system, the adjuster further comprising fastening means for closing each passageway about the respective belt portion.

In a preferred embodiment of the invention, described below, the panels are permanently secured together in the central region as by stitching or by rivets.

Advantageously, the central region is arranged to be generally triangular, the two panels being secured along two lines defining two sides of the triangle converging towards an apex.

Preferably, the fastening means are provided along respective lines facing the securing means. Such fastening means may, for example, be in the form of releasable closure means such as a Velcro fastening or poppets.

The two panels may be triangular, in which case the two passageways will advantageously intersect at a front apex of the two panels to form a combined exit opening for the shoulder belt and the lap belt portions. In an alternative form of the invention, the panels may be more generally rhomboid in shape and the two passageways may terminate separately at a front edge of the adjuster.

The invention is described further, by way of example, with reference to the accompanying drawings, in which:
- Figure 1 is a diagrammatic view of a safety belt adjuster according to the invention in use by a child as a passenger in a vehicle;
- Figure 2 is a plan view of a first embodiment of the safety belt adjuster showing how it is fitted to shoulder and lap belt portions of the safety belt system shown in Figure 1:
- Figure 3 is a plan view of the first embodiment of safety belt adjuster according to the invention:
- Figure 4 is a perspective view of the safety belt adjuster of Figure 3 shown in an open condition: and
- Figure 5 is a plan view of a second embodiment of safety belt adjuster according to the invention.

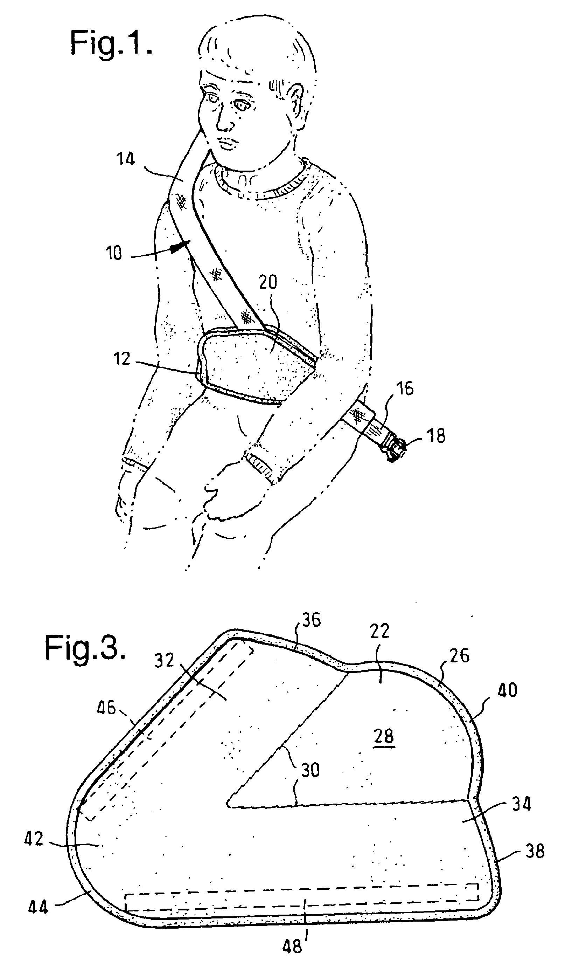

Referring initially to Figure 1, a child is shown seated on the seat of a vehicle and protected by the restraint of a conventional safety belt system 10 of three point design. Such a safety belt system 10 comprises a lap belt portion 12 passing across the lap of the child and a shoulder belt portion 14 passing down across the shoulder of the child, these two safety belts being held in place by the engagement of a buckle 16 with a clasp 18.

In order to ensure that the orientation of the shoulder belt portion 14 is modified to suit the small stature of a child, a shoulder belt adjuster 20 according to the invention is provided. As shown in Figure 1, this shoulder belt adjuster 20 is arranged to engage both the lap belt portion 12 and the shoulder belt portion 14 of the safety belt system and to hold them in fixed relationship to one another with the normal path of the shoulder belt portion being modified to make a smaller than usual angle with the lap belt portion 12.

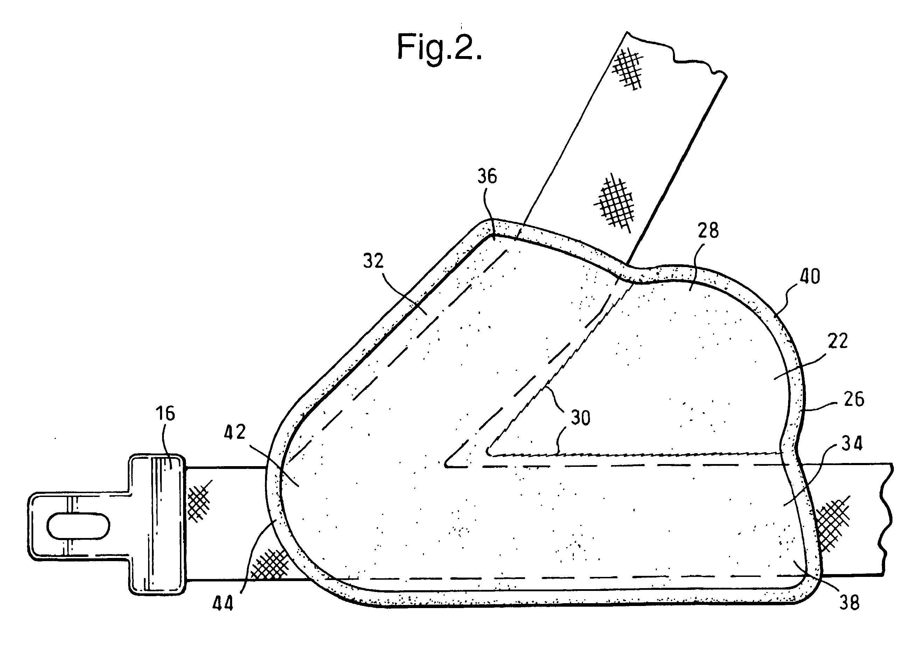

The shoulder belt adjuster 20 is shown in more detail in Figures 2 to 4 and comprises two similar panels 22, 24 of stiff but flexible material. For example, the panels may be made by a backing board covered by padding or of a stiffly yieldable plastics or rubber material, such that the panels have sufficient rigidity to hold the lap and shoulder belt portions securely in place but to be comfortable against the body of the child. The two panels 22, 24 are generally triangular in shape and are bound at their edges with strips of webbing 26 to provide a softened safety edge to each.

As shown in the Figures, the panels are arranged face to face and they are permanently secured together in a triangular central region 28 by means of two lines 30 of stitching. These two lines of stitching 30 define outside the central region 28 two passageways 32, 34 respectively for the shoulder belt portion and the lap belt portion of the safety belt system. The passageways, 32, 34 commence at input openings 36, 38 respectively at a rear side 40 of the adjuster and converge towards a combined exit opening 42 at an apex 44 of the adjuster.

The two passageways 32, 34 are releasably closed along their sides facing the stitching lines 30 by means of respective releasable closures 46, 48 comprising velcro fastenings, poppers or other suitable closure means. As shown, the closures 46, 48 are provided along two lines comprising outer edges of the two panels 22, 24.

In use, the child is seated on the vehicle seat and the safety belt system is fastened in the normal way, and then the shoulder belt adjuster 20 is fitted subsequently.

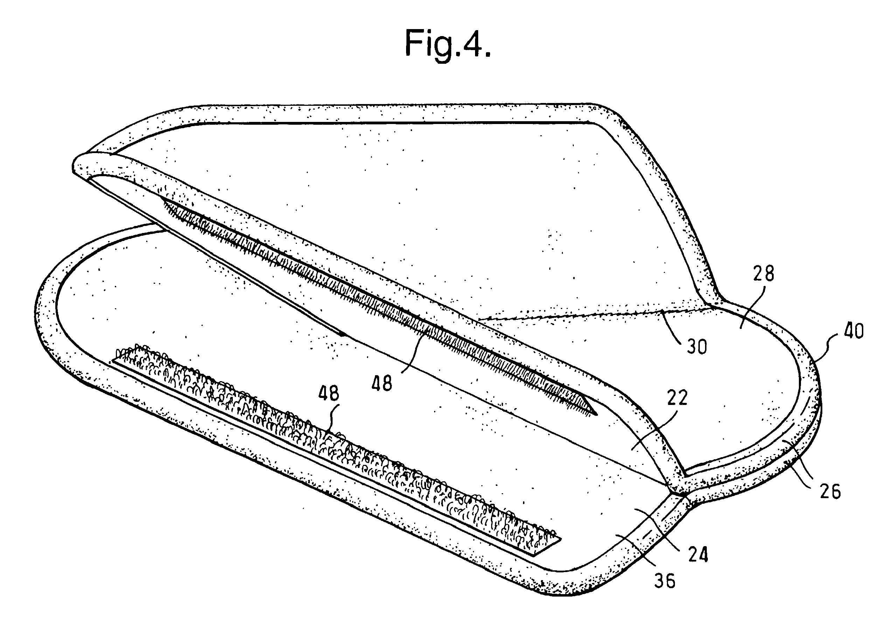

In order to fit the shoulder belt adjuster 20, the releasable fastening means 46, 48 at the sides of both passageways 32, 34 are temporarily opened as shown in Figure 4, and the shoulder belt adjuster 20 is inserted between the lap and shoulder belt portions of the belt system in a direction towards the buckle 16 of the safety belt system. Once the lap belt portion is inserted into the passageway 34, the closure means 48 are firmly closed to secure the shoulder belt adjuster 20 to the lap belt portion. Next, the shoulder belt is manually displaced to insert it into the passageway 32, and the closure means 46 are securely fastened. The shoulder belt adjuster 20 is now firmly secured in place and the shoulder belt portion 14 is oriented comfortably across body of the child.

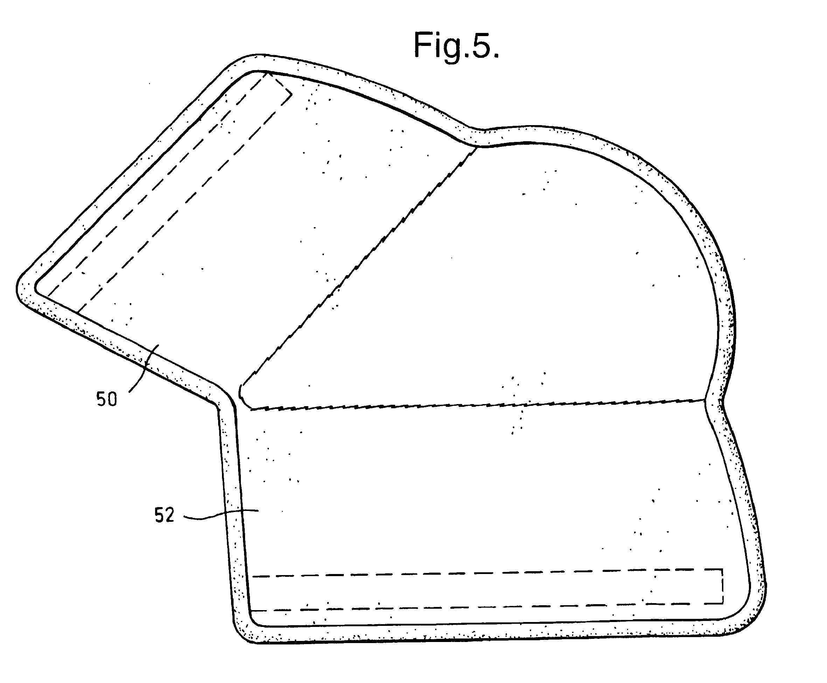

A second embodiment of the shoulder belt adjuster is shown in Figure 5 and differs from the first embodiment only in that the shape of the panels has been altered by removing the apex 44 so as to give the two panels instead a rhomboid shape. The two passageways 32, 34 terminate respectively at separate exit openings 50, 52, for example adjacent the front corner of the triangular central region 28. In other respects, the second embodiment incorporates the same features as the first embodiment and these need not be described further.

Various other modifications are also possible to the described shoulder belt adjuster. For example, the stitching lines 30 may be replaced or supplemented by a rivet or lines of rivets.

Likewise, the closure means 46, 48 for the two passageways 32,34, described above as velcro fastening means, may be replaced by poppers or other suitable releasable closure means.

An alternative possibility for the closure of the two passageways 32, 34 is for one of the panels 22,24 to be formed along its associated outer edges with two flaps arranged respectively to fold over and behind the other panel to engage closure means, such as velcro fastening means or poppers, on the outer surface of said other panel.

The described shoulder belt adjuster is easy to use and it ensures an appropriate modification of a standard safety belt system to accommodate a child in a safe and secure restraint arrangement.

## Claims

1. A safety belt adjuster for use with a three-point safety belt system (10) of the kind having a shoulder belt portion (14) and a lap belt portion (12) for adjusting the orientation of the shoulder belt portion for use by a child, the safety belt adjuster being **characterised by** a pair of panels (22,24) arranged face-to-face and secured together in a central region (28) to provide outside the central region two passageways (32,34) for receiving respectively the shoulder belt portion and the lap belt portion of the safety belt system, the adjuster further comprising fastening means (46,48) for closing each passageway about the respective belt portion.

2. A safety belt adjuster according to claim 1 **characterised in that** the panels are permanently secured together in the central region, as by stitching (30).

3. A safety belt adjuster according to claim 1 or 2 **characterised in that** the central region is substantially triangular and the panels are secured together along two lines (30) defining two sides of the triangle.

4. A safety belt adjuster according to any of claims 1 to 3 **characterised in that** the fastening means are releasable, for example comprising Velcro fastening means, and are provided along two lines comprising outer edges of the panels.

5. A safety belt adjuster according to any of claims 1 to 4 **characterised in that** each of the passageways has a respective entry opening (36, 38) at a rear edge (4) of the adjuster and the two passageways converge towards a front edge (44) of the adjuster.

6. A safety belt adjuster according to any one of claims 1 to 5 **characterised in that** the two panels are generally triangular and the two passageways converge towards and intersect at a combined exit opening (42) at a front apex (44) of the adjuster.

7. A safety belt adjuster according to any one to claims 1 to 5 **characterised in that** the two panels are generally rhomboid in shape and the two passageways terminate in respective separate exit openings (50, 52) at a front edge of the adjuster.

8. A safety belt adjuster according to any preceding claim **characterised in that** the panels are formed of a stiff material and are padded.

9. A safety belt adjuster according to any of claims 1 to 7 **characterised in that** the panels are formed of a stiffened padded material.

## Patentansprüche

1. Einstellvorrichtung für einen Sicherheitsgurt zur Verwendung mit einem Dreipunkt-Sicherheitsgurtsystem (10) von der Art, welches einen Schultergurtabschnitt (14) und einen Schoß- oder Sitzgurtabschnitt (12) zur Einstellung der Ausrichtung des Schultergurtabschnitts zur Verwendung durch ein Kind aufweist, wobei die Sicherheitsgurt-Einstellvorrichtung durch Folgendes **gekennzeichnet** ist: ein Paar Stoffbahnen (22, 24), welche gegenüberliegend und aneinander befestigt in einem zentralen Bereich (28) angeordnet sind, um außerhalb des zentralen Bereichs zwei Durchgänge (32, 34) für die Aufnahme des Schultergurtabschnitts bzw. des Schoß- oder Sitzgurtabschnitts des Sicherheitsgurtsystems bereitzustellen, wobei die Einstellvorrichtung weiter eine Befestigungsvorrichtung (46, 48) zum Verschließen des Durchgangs um den jeweiligen Gurtabschnitt aufweist.

2. Einstellvorrichtung für einen Sicherheitsgurt nach Anspruch 1, **dadurch gekennzeichnet, dass** die Stoffbahnen an dem zentralen Bereich dauerhaft aneinander befestigt sind, beispielsweise durch Heften (30).

3. Einstellvorrichtung für einen Sicherheitsgurt nach Anspruch 1 oder 2, **dadurch gekennzeichnet, dass** der zentrale Bereich im Wesentlichen dreieckig ist und die Stoffbahnen entlang zweier Linien (20), welche zwei Seiten des Dreiecks begrenzen, aneinander befestigt sind.

4. Einstellvorrichtung für einen Sicherheitsgurt nach einem der Ansprüche 1 bis 3, **dadurch gekennzeichnet, dass** die Befestigungsvorrichtungen lösbar sind, beispielsweise einen Klettverschluss aufweisen, und entlang zweier Linien, welche Außenkanten der Stoffbahnen umfassen, bereitgestellt werden.

5. Einstellvorrichtung für einen Sicherheitsgurt nach einem der Ansprüche 1 bis 4, **dadurch gekennzeichnet, dass** jeder der Durchgänge eine jeweilige Eingangsöffnung (36, 38) an einer Hinterkante (4) der Einstellvorrichtung aufweist und dass die beiden Durchgänge in Richtung einer Vorderkante (44) der Einstellvorrichtung konvergieren oder zusammenlaufen.

6. Einstellvorrichtung für einen Sicherheitsgurt nach einem der Ansprüche 1 bis 5, **dadurch gekennzeichnet, dass** die beiden Stoffbahnen im Allgemeinen dreieckig ausgebildet sind und die beiden Durchgänge in Richtung einer kombinierten Ausgangsöffnung (42) an einem vorderen Scheitelpunkt (44) der Einstellvorrichtung konvergieren und sich dort schneiden.

7. Einstellvorrichtung für einen Sicherheitsgurt nach einem der Ansprüche 1 bis 5, **dadurch gekennzeichnet, dass** die beiden Stoffbahnen im Allgemeinen rautenförmige Gestalt aufweisen und die beiden Durchgänge in jeweiligen separaten Ausgangsöffnungen (50, 52) an einer Vorderkante der Einstellvorrichtung enden.

8. Einstellvorrichtung für einen Sicherheitsgurt nach einem der vorhergehenden Ansprüche, **dadurch gekennzeichnet, dass** die Stoffbahnen aus einem steifen Material gebildet und gepolstert sind.

9. Einstellvorrichtung für einen Sicherheitsgurt nach einem der Ansprüche 1 bis 7, **dadurch gekennzeichnet, dass** die Stoffbahnen aus einem versteiften, gepolsterten Material gebildet sind.

## Revendications

1. Dispositif de réglage de ceinture de sécurité destiné à servir avec un système de ceinture de sécurité (10) à trois points, du type ayant une partie formant ceinture thoracique (14) et une partie formant ceinture ventrale (12) afin de régler l'orientation de la partie formant ceinture thoracique en vue de son utilisation par un enfant, le dispositif de réglage de ceinture de sécurité étant **caractérisé par** une paire de panneaux (22, 24) disposés face à face et fixés l'un à l'autre dans une zone centrale (28) pour créer, à l'extérieur de la zone centrale, deux passages (32, 34) destinés respectivement à recevoir la partie formant ceinture thoracique et la partie formant ceinture ventrale du système de ceinture de sécurité, le dispositif de réglage comprenant en outre des moyens de fixation (46, 48) servant à fermer chaque passage autour de la partie de ceinture respective.

2. Dispositif de réglage de ceinture de sécurité selon la revendication 1, **caractérisé en ce que** les panneaux sont fixés à demeure l'un à l'autre dans la zone centrale, par exemple par des coutures (30).

3. Dispositif de réglage de ceinture de sécurité selon la revendication 1 ou 2, **caractérisé en ce que** la zone centrale est sensiblement triangulaire et les panneaux sont fixés l'un à l'autre suivant deux lignes (30) définissant deux côtés du triangle.

4. Dispositif de réglage de ceinture de sécurité selon l'une quelconque des revendications 1 à 3, **caractérisé en ce que** les moyens de fixation sont libérables, étant par exemple constitués par des moyens de fixation en Velcro®, et sont disposés sur deux lignes incluant des bords extérieurs des panneaux.

5. Dispositif de réglage de ceinture de sécurité selon l'une quelconque des revendications 1 à 4, **caractérisé en ce que** chacun des passages comporte une ouverture d'entrée respective (36, 38) sur un bord arrière (4) du dispositif de réglage et les deux passages convergent vers un bord avant (44) du dispositif de réglage.

6. Dispositif de réglage de ceinture de sécurité selon l'une quelconque des revendications 1 à 5, **caractérisé en ce que** les deux panneaux sont globalement triangulaires et les deux passages convergent vers et se croisent à une ouverture de sortie combinée (42) au niveau d'un sommet avant (44) du dispositif de réglage.

7. Dispositif de réglage de ceinture de sécurité selon l'une quelconque des revendications 1 à 5, **caractérisé en ce que** les deux panneaux ont globalement une forme de losange et les deux passages aboutissent dans des ouvertures de sortie séparées (50, 52) sur un bord avant du dispositif de réglage.

8. Dispositif de réglage de ceinture de sécurité selon l'une quelconque des revendications précédentes, **caractérisé en ce que** les panneaux sont en matière rigide et sont rembourrés.

9. Dispositif de réglage de ceinture de sécurité selon l'une quelconque des revendications 1 à 7, **caractérisé en ce que** les panneaux sont en matière rembourrée rigidifiée.
